(19)

Europäisches
Patentamt

European
Patent Office

Office européen
des brevets

(11) **EP 2 690 591 A1**

(12) **EUROPEAN PATENT APPLICATION**

(43) Date of publication:
**29.01.2014 Bulletin 2014/05**

(51) Int Cl.:
***G06Q 30/02*** (2012.01)

(21) Application number: **13177073.7**

(22) Date of filing: **18.07.2013**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.07.2012 US 201213556800**

(71) Applicant: **Fair Isaac Corporation**
**Minneapolis, MN 55402 (US)**

</td><td>

(72) Inventor: **Hemann, Joshua Gavin**
**Boulder, CO 80305 (US)**

(74) Representative: **Mintz Levin Cohn Ferris Glovsky and Popeo LLP**
**Alder Castle**
**10 Noble Street**
**London EC2V 7JX (GB)**

</td></tr>
</table>

(54) **Scoring consumer transaction consistency and diversity**

(57) A time interval during which to present an offering to a consumer is determined using a cadence consistency score calculated for the consumer, In addition, it is determined which of a plurality of items to offer to the consumer is determined using an item diversity score calculated for the consumer. Thereafter, provision an offering for the determined item during the determined time interval is initiated. Related apparatus, systems, techniques and articles are also described.

FIG. 4

**Description**

**TECHNICAL FIELD**

The subject matter described herein relates to scoring consumer transaction consistency and diversity in support of reducing consumption of network bandwidth by triggering highly targeted and relevant calls-to-action.

**BACKGROUND**

Customer - centric marketing is becoming the norm among retailers and service providers. In order to stay competitive, businesses will need to continue to reach out to customers with relevant products and messages. Marketing approaches have attempted to evolve from a mass communication approach to one that is tailored and personalized in support of this growing need. Such a mass communication approach results in network bandwidth being consumed by the transmission of messages, which are necessarily large in number to ensure that the messages do reach some potential customers to whom they are of interest even though they will be simply disregarded by most. However, creating relevant messages and offers for personalized communication requires organizations to analyze consumer behavior across multiple dimensions. Consumer data presents a challenge both due to underlying complexity as well as the sheer volume at which it must be analyzed.

Both simple and more complex rule-based systems have traditionally been used to target customers. These rule-based systems are typically based upon a mass characteristic and do not meet the needs for a more 1-1 customer centric approach. Advanced analytical methods are required, that can scalably detect patterns in individual customer. These analytical methods can be used to both detect and predict customer behavior that can be served through a specific call-to-action.

While advanced analytical approaches can yield more useful methods for targeting consumers, they often take significant time and expertise to develop and apply across different business contexts.

**SUMMARY**

In one aspect, a time interval during which to present an offering to a consumer is determined using a cadence consistency score calculated for the consumer. In addition, it is determined which of a plurality of items to offer to the consumer is determined using an item diversity score calculated for the consumer. Thereafter, provision of an offering for the determined item during the determined time interval is initiated.

The item can be a product, a service, or a combination of both. Provision of the offering can include one or more of displaying data characterizing the offering, transmitting data characterizing the offering, and storing data characterizing the offering.

The cadence consistency score can be calculated using:

$$Cadence\ Consistency\ Score_{i,j} = 1 - \left( \frac{stddev(intervals)}{average(intervals)} \middle/ \sqrt{num\_interactions} \right)$$

where intervals characterize a time period between interactions with an $i^{th}$ consumer and indices $i,j$ refer to the $i^{th}$ consumer over a $j^{th}$ category of items a business provides.

The item diversity score can be calculated using:

$$Item\ Diversity\ Score_{i,j} = 1 - \sum_{k=0}^{K-1} p_k^2$$

where $i,j$ refers to an $i^{th}$ consumer over a $j^{th}$ item category a business provides; $p_k$ is a portion of interactions in category $j$ that involve item $k$, and the sum is over all $K$ available items.

In an interrelated aspect, a cadence consistency score for a consumer is calculated. It is later determined, using the cadence consistency score, a time interval during which to present an offering to the consumer. Subsequently, provision of the offering is initiated during the determined time interval.

In yet a further interrelated aspect, an item diversity score is calculated for a consumer. Using this item diversity score, it is determined which of a plurality of items to offer to the consumer. Once this determination has been made, provision of an offering for the determined item is initiated.

Computer program products are also described that comprise non-transitory computer readable media storing instructions, which when executed by at least one data processor of one or more computing systems, causes the at least one data processor to perform operations herein. Similarly, computer systems are also described that may include one or more data processors and a memory coupled to the one or more data processors. The memory may temporarily or permanently store instructions that cause at least one processor to perform one or more of the operations described herein. In addition, methods can be implemented by one or more data processors either within a single computing system or distributed among two or more computing systems.

The subject matter described herein provides many advantages. For example, the current subject matter is advantageous in that it allows for characterizing complex and highly variable shopping patterns, with respect to both the cadence of consumers' transactions and the diversity of both concurrent and subsequent purchases across a wide array of goods and services. The two resulting scores are easy to understand and implement, supporting multiple goals related to delivering targeted, relevant offerings and communications to consumers. Aside from these advantages, by using the cadence consistency and item diversity scores as described above, highly targeted and relevant messages are delivered, which are far more likely to be acted on. Thus, the quantity of messages transmitted to customers as a whole diminishes rapidly as a result, and less network bandwidth is consumed.

The details of one or more variations of the subject matter described herein are set forth in the accompanying drawings and the description below. Other features and advantages of the subject matter described herein will be apparent from the description and drawings, and from the claims.

## DESCRIPTION OF DRAWINGS

FIG. 1 is a diagram illustrating purchase interval lengths over 200 consumers across one year's transaction history in a first category;

FIG. 2 is a diagram illustrating purchase interval lengths over 200 consumers across one year's transaction history in a second category;

FIG. 3 is a process flow diagram illustrating scoring of consumer transaction consistency and diversity; and

FIG. 4 is a diagram illustrating scoring of consumer transaction consistency and diversity using customer data and resulting actions.

## DETAILED DESCRIPTION

With the current subject matter, a Poisson processes can be used to model discrete event data relating to one or more interactions of a consumer with a business (whether it results in a conversion event or otherwise). If one assumes consumers interact with a given business's items (products, service offerings, etc.) according to this discrete data generating process, then the interval lengths between these transactions can be distributed continuously according to an Exponential distribution. The standard deviation and mean of these interval lengths will be equal, and therefore their ratio will be 1.0. A ratio less than 1 implies that the distribution of interval lengths are less varied than would be warranted under the original Poisson assumption. To give weight to a consumer's transaction frequency, this ratio can be normalized by the square root of the number of transactions (*N* transactions result in *N-1* interval lengths between them). Finally, subtracting this amount from 1 yields one type of a cadence consistency score. A value close to 0 implies that the given consumer's transaction cadence is highly variable within the given item category, whereas a value closer to 1 implies that the consumer has very rhythmic and frequent transaction cadence. The score can be defined formally in equation 1 below:

$$Cadence\ Consistency\ Score_{i,j} = 1 - \left( \frac{\frac{stddev(intervals)}{average(intervals)}}{\sqrt{num\_interactions}} \right) \quad (1)$$

where indices *i,j* refer to the $i^{th}$ consumer over the $j^{th}$ category of goods or services a business provides.

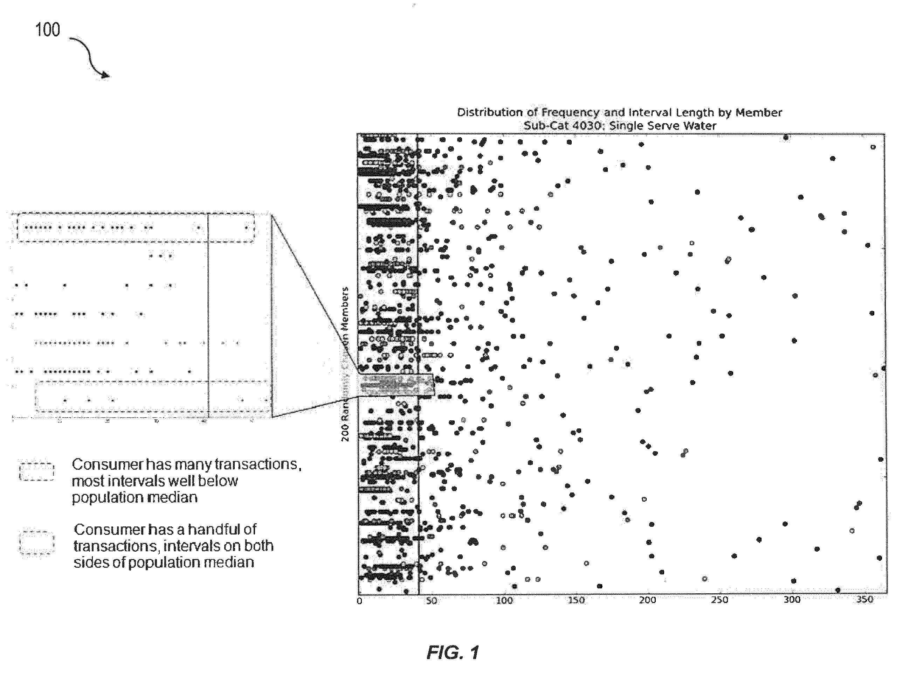

This score characterizes numerically what can be identified visually in diagram 100 of FIG. 1. This diagram 100 shows purchase interval lengths for 200 consumers across a one year transaction history in a single category (e.g., single serve bottled water). Each row along the ordinate corresponds to a randomly sampled consumer, whose interval data are plotted in the same color within that row. Colors used between rows alternate to ease separation of individual consumers. The vertical gray line corresponds to the median interval over all consumers with transactions in this category of goods.

As can be noted from FIG. 1, some consumers have frequent and rhythmic transactions in bottled water, whereas others do not. Here, the highlighted consumer in red would get a higher cadence consistency score than the member highlighted in green. The cadence consistency score provides an algorithmic method to quickly identify these "repeat" shoppers from their perhaps more opportunistic counterparts.

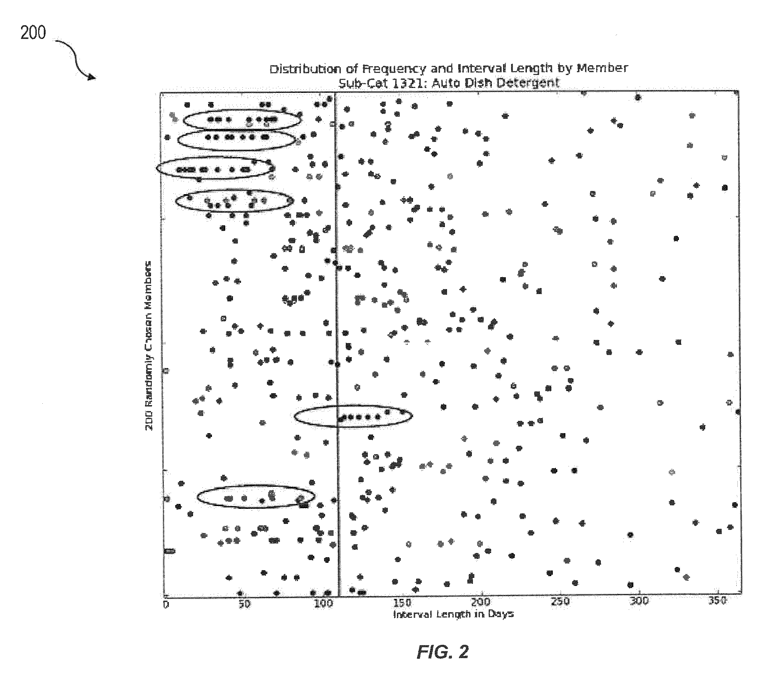

The cadence consistency score can also be used to characterize the category of items themselves. For example, in the diagram 200 of FIG. 2, the same visualization is applied to the Automatic Dish Detergent category rather than bottled water (i.e., the diagram illustrates purchase interval lengths over 200 consumers across one year's transaction history in the "Automatic Dish Detergent" category). "Repeat shoppers" are circled to illustrate what it means to repeat shop something.

Unlike the transaction data seen in FIG. 1, most consumers do not repeat shop this item category, and further, the typical interval length between transactions is longer. Thus, the cadence consistency score can be used to algorithmically identify these rare, repeat shoppers in this item category (important since the visual method is neither consistent, usable or scalable in an enterprise setting with millions of consumers), as well as attribute the category itself as one not associated with repeat shopping.

Characterizing consumers' cadence can be used singly or in combination with other scores. When used separately, the cadence consistency score can be used (e.g., by a variety of models, offering engines, etc.) to identify an appropriate time interval during which an offering should be presented to a particular consumer. For example, if a consumer regularly buys a pound of coffee every month, an offering for coffee should be provided to the consumer within a time interval that corresponds to the next time when such consumer would normally buy coffee (as opposed to sending an offering a week after the last coffee was purchased). Such timing can help ensure a greater conversion rate with regard to offerings.

In some cases, a multi-tiered approach can be used (e.g., by a variety of models, offering engines, etc.) after such time interval to determine an optimal offering for the consumer. For example, an item diversity score can be used (e.g., by a variety of models, offering engines, etc.) that characterizes the diversity of items a consumer interacts with from a given business within a given category. This item diversity score can be used to determine which of several offerings is mostly likely going to be result in a conversion event (it can be used singly or in combination with other indicators such as a cadence consistence score). For example, if the consumer is loyal to a particular brand of coffee, then any new offerings should relate to such brand. However, if the consumer has a high item diversity score with regard to coffee, offerings can be provided for other brands of coffee (because the score indicates that the consumer is willing to purchase other brands).

One example of an item diversity score is defined as in equation 2 below:

$$\text{Item Diversity Score}_{i,j} = 1 - \sum_{k=0}^{K-1} p_k^2 \qquad (2)$$

where $i,j$ refers to the $i^{th}$ consumer over the $j^{th}$ item category a business provides; $p_k$ is the portion of interactions in category $j$ that involve item $k$, and the sum is over all $K$ available items. This score is monotonic in $[0,1]$, where 0 indicates the same item has always been interacted with and 1 indicates that a large number of items are interacted with uniformly.

Taken together, the cadence consistency score and the item diversity scores can be used in a variety of settings in which complex, variable consumer behavior must trigger targeted, relevant responses from marketers and businesses. The scores allow consumers to be segmented and monitored, with their current behavior triggering customer relationship management events relative to past behavior (e.g. offering a discount on a service when a previously consistent consumer stops interacting with the business; elevating a consumer's status in a loyalty program when previously inconsistent and non-diverse transactions broaden in scope or become more frequent).

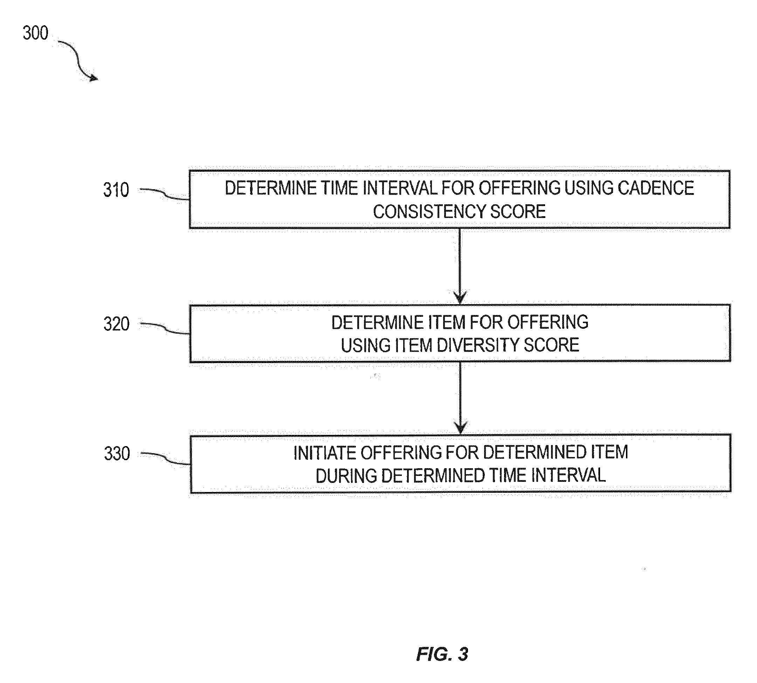

The process flow diagram 300 of FIG. 3 illustrates one manner in which the scores can be used in combination. A time interval during which to present an offering to a consumer is determined, at 310, using a cadence consistency score calculated for the consumer. An item out of a plurality of items (e.g., products, services, etc.) to offer to the consumer is determined, at 320, using an item diversity score calculated for the consumer. While diagram 300 shows the time interval being calculated prior to the item, it will be appreciated that the item can be determined prior and/or in parallel to the time interval. Subsequently, at 330, provision of an offering for the determined item is initiated during the determined time interval.

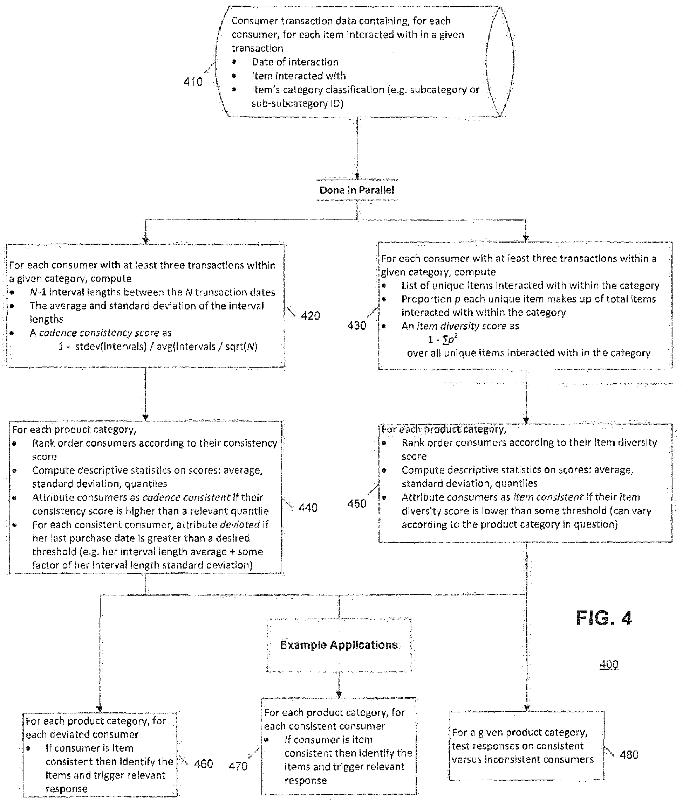

FIG. 4 is a diagram 400 showing how customer transaction data 410 can be utilized across various applications 460, 470, 480. While diagram 400 illustrates a specific combination of operations / steps, it will be appreciated that such operations / steps can, in some cases, be utilized singly or in different combinations. As used herein, the term "transaction" can refer to a quantifiable interaction by a consumer with the goods or service of a business. For example, in a retail setting, a transaction could be the consumer purchasing a product from a physical store. In a banking setting, a transaction can be a consumer using an on-line service to manage / review a checking account. The customer transaction data 410 can include data characterizing how a consumer interacts with each item in a given transaction such as date of transaction, an item interacted with, and the item's category classification. For each consumer with at least three transactions within a given category, at 420, the following can be computed: (i) N-1 interval lengths between the N transaction dates; (ii) the average and standard deviation of the interval lengths; and (iii) a cadence consistency score as 1 - stdev(intervals) / avg(intervals / sqrt(N). Thereafter, at 440, for each product category: (i) rank order consumers according to their cadence consistency score, (ii) compute descriptive statistics on scores: average, standard deviation, quantiles, (iii) attribute consumers as cadence consistent if their consistency score is higher than a relevant quantile, and (iv) for each consistent consumer, attribute the consumer as deviated if his/her last purchase date is greater than a desired threshold (e.g. his/her interval length average + some factor of her interval length's standard deviation).

At 430, for each consumer with at least three transactions within a given category, the following can be computed (i) A list of unique items interacted with within the category; (ii) a proportion $p$ each unique item makes up of total items interacted with within the category; and (iii) an item diversity score as 1 - $\Sigma p^2$ over all unique items interacted with in the category. Note that (i) and (iii) may be computed in independent steps. Thereafter, at 450, for each product category: (i) rank order consumers according to their item diversity score, (ii) compute descriptive statistics on scores: average, standard deviation, quantiles, and (iii) attribute consumers as item consistent if their item diversity score is lower than some threshold (can vary according to the product category in question).

As noted above, the calculated cadence consistency scores and the item diversity scores can be utilized in a variety of ways. For example, at 460, for each product category and for each deviated consumer, if the consumer is item consistent then the items can be identified and a relevant response can be formulated and/or triggered. As used herein a response can be characterized as a good or service offered by a business to consumers (whether exhibiting consistent or inconsistent purchasing behavior). In addition, at 470, for each product category, for each consistent consumer, if the consumer is item consistent then the items can be identified so that a relevant response can be formulated and/or triggered. Further, at 480, for a given product category responses can be tested on consistent versus inconsistent consumers in order to identify optimal offerings.

It will be appreciated that the scores described herein can be used in tandem to support a common but critical business goal: regaining interaction from previously engaged consumers to protect share of wallet (i.e., the percentage ("share") of a customer's expenses ("of wallet") for an item that goes to the business selling the item) in competitive retail environments. In particular, the scores can be used to execute a targeted and relevant communication to recapture share of wallet by:

1. Using the cadence consistency score, identify consumers who exhibit repeat purchase behavior in a given category of goods;

2. Monitor these consumers' transactions to identify divergence from normal behavior;

3. Identify consumers who miss transactions, relative to their typical interval length and variability (already calculated elements of the cadence consistency score);

4. Use the item diversity score to develop groups of offerings and services consumers further into a group that needs highly specific offers versus a group that shops more diversely in the category and will therefore perceive multiple offers types as being relevant; and

5. Trigger offer and service responses appropriate for each consumer.

Aspects of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the subject matter described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

Although a few variations have been described in detail above, other modifications are possible. For example, the logic flow depicted in the accompanying figures and described herein do not necessarily require the particular order shown, or sequential order, to achieve desirable results. Other embodiments may be within the scope of the following claims.

**Claims**

1. A computer-implemented method comprising:

   determining, using a cadence consistency score calculated for a consumer, a time interval during which to present an offering to the consumer;
   determining, using an item diversity score calculated for the consumer, which of a plurality of items to offer to the consumer; and
   initiating provision of an offering for the determined item during the determined time interval.

2. A method as in claim 1, wherein the determined item is a product and/or a service.

3. A method as in claim 1 or claim 2, wherein initiating provision of the offering comprises one or more of: displaying data characterizing the offering, transmitting data characterizing the offering, and storing data characterizing the offering.

4. A method as in any of the preceding claims, wherein the cadence consistency score is calculated using:

$$Cadence\ Consistency\ Score_{i,j} = 1 - \left( \frac{\frac{stddev(intervals)}{average(intervals)}}{\sqrt{num\_interactions}} \right)$$

where intervals characterize a time period between interactions with an $i^{th}$ consumer and indices $i,j$ refer to the $i^{th}$ consumer over a $j^{th}$ category of items a business provides.

5. A method as in any of the preceding claims, wherein the item diversity score is calculated using:

$$Item\ Diversity\ Score_{i,j} = 1 - \sum_{k=0}^{K-1} p_k^2$$

where $i,j$ refers to an $i^{th}$ consumer over a $j^{th}$ item category a business provides; $p_k$ is a portion of interactions in category $j$ that involve item $k$, and the sum is over all $K$ available items.

**6.** A computer-implemented method comprising:

calculating a cadence consistency score for a consumer;
determining, using the cadence consistency score, a time interval during which to present an offering to the consumer; and
initiating provision of the offering during the determined time interval.

**7.** A method as in claim 6, wherein the offering is for a product and/or a service.

**8.** A method as in claim 6 or claim 7, wherein initiating provision of the offering comprises one or more of: displaying data characterizing the offering, transmitting data characterizing the offering, and storing data characterizing the offering.

**9.** A method as in any of claims 6 to 8, wherein the cadence consistency score is calculated using:

$$Cadence\ Consistency\ Score_{i,j} = 1 - \left( \frac{stddev(intervals)}{average(intervals)} \middle/ \sqrt{num\_interactions} \right)$$

where intervals characterize a time period between interactions with an $i^{th}$ consumer and indices $i,j$ refer to the $i^{th}$ consumer over a $j^{th}$ category of items a business provides.

**10.** A computer-implemented method comprising:

calculating an item diversity score for a consumer;
determining, using the item diversity score, which of a plurality of items to offer to the consumer; and
initiating provision of an offering for the determined item.

**11.** A method as in claim 10, wherein the determined item is a product and/or a service.

**12.** A method as in claim 10 or claim 11, wherein initiating provision of the offering comprises one or more of: displaying data characterizing the offering, transmitting data characterizing the offering, and storing data characterizing the offering.

**13.** A method as in any of claims 10 to 12, wherein the item diversity score is calculated using:

$$\text{Item Diversity Score}_{i,j} = 1 - \sum_{k=0}^{K-1} p_k^2$$

where $i,j$ refers to an $i^{th}$ consumer over a $j^{th}$ item category a business provides; $p_k$ is a portion of interactions in category $j$ that involve item $k$, and the sum is over all $K$ available items.

**14.** A non-transitory computer program product storing instructions, which when executed, cause one or more data processors of one or more computer systems to execute operations according to the method of any of the preceding claims.

Distribution of Frequency and Interval Length by Member
Sub-Cat 4030: Single Serve Water

Consumer has many transactions,
most intervals well below
population median

Consumer has a handful of
transactions, intervals on both
sides of population median

FIG. 1

Distribution of Frequency and Interval Length by Member
Sub-Cat 1321: Auto Dish Detergent

*FIG. 2*

300

310 — DETERMINE TIME INTERVAL FOR OFFERING USING CADENCE
CONSISTENCY SCORE

320 — DETERMINE ITEM FOR OFFERING
USING ITEM DIVERSITY SCORE

330 — INITIATE OFFERING FOR DETERMINED ITEM
DURING DETERMINED TIME INTERVAL

*FIG. 3*

EP 2 690 591 A1

Consumer transaction data containing, for each
consumer, for each item interacted with in a given
transaction
- Date of interaction
- Item interacted with
- Item's category classification (e.g. subcategory or
sub-subcategory ID)

410

**Done in Parallel**

For each consumer with at least three transactions within
a given category, compute
- $N$-1 interval lengths between the $N$ transaction dates
- The average and standard deviation of the interval
lengths
- A *cadence consistency score* as
$$1 - \text{stdev(intervals)} / \text{avg(intervals} / \text{sqrt}(N)$$

420

For each consumer with at least three transactions within a
given category, compute
- List of unique items interacted with within the category
- Proportion $p$ each unique item makes up of total items
interacted with within the category
- An *item diversity score* as
$$1 - \Sigma p^2$$
over all unique items interacted with in the category

430

For each product category,
- Rank order consumers according to their consistency
score
- Compute descriptive statistics on scores: average,
standard deviation, quantiles
- Attribute consumers as *cadence consistent* if their
consistency score is higher than a relevant quantile
- For each consistent consumer, attribute *deviated* if
her last purchase date is greater than a desired
threshold (e.g. her interval length average + some
factor of her interval length standard deviation)

440

For each product category,
- Rank order consumers according to their item diversity
score
- Compute descriptive statistics on scores: average,
standard deviation, quantiles
- Attribute consumers as *item consistent* if their item
diversity score is lower than some threshold (can vary
according to the product category in question)

450

**FIG. 4**

**Example Applications**

400

For each product category, for
each deviated consumer
- If consumer is item
consistent then identify the
items and trigger relevant
response

460

For each product category, for
each consistent consumer
- If consumer is item
consistent then identify the
items and trigger relevant
response

470

For a given product category,
test responses on consistent
versus inconsistent consumers

480

Europäisches
Patentamt

European
Patent Office

Office européen
des brevets

# EUROPEAN SEARCH REPORT

Application Number

EP 13 17 7073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 | 1-14 | INV. G06Q30/02 |
| L | * The claimed subject-matter with due regard to the description and drawings, relates to processes and methods comprised in the list of subject-matter and activities excluded from patentability under Art.52(2) and (3) EPC. The applicant is advised that in accordance with the established practice of the EPO, no search need to be performed in respect of those aspects of the claimed invention. The only identifiable technical aspects of the claimed invention relate to the use of conventional, general-purpose data processing technology for selecting a time and an item to offer to a consumer based on data generation and programs execution (following mathematical models or formulas) according certain rules of an inherently non-technical nature (for marketing purpose) . The information technology employed is considered to have been generally known as it was widely available to everyone at the date of | 1-14 | TECHNICAL FIELDS SEARCHED (IPC)<br><br>G06Q |

The present search report has been drawn up for all claims

| Place of search | Date of completion of the search | Examiner |
|---|---|---|
| The Hague | 5 November 2013 | Thiam, Mansour |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 17 7073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | filing/priority of the present application. The notoriety of such prior art cannot reasonably be contested. No documentary evidence was therefore considered required. *<br><br>----- | | |
| | | | **TECHNICAL FIELDS SEARCHED (IPC)** |

The present search report has been drawn up for all claims

| Place of search | Date of completion of the search | Examiner |
|---|---|---|
| The Hague | 5 November 2013 | Thiam, Mansour |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)